# FASCICULE DE BREVET EUROPEEN

(11) **EP 2 491 080 B1**
(45) Date de publication et mention de la délivrance du brevet: **07.05.2014**
(21) Numéro de dépôt: 10782680.2
(22) Date de dépôt: 22.10.2010
(51) Int. Cl.: C08K 5/1565, C09D 7/12, C09D 133/00, C09C 3/08, C09D 5/02

(54) **FORMULATIONS AQUEUSES COMPRENANT DES DIOXOLANES EN TANT QU´AGENTS DE COUPLAGE**
WÄSSRIGE FORMULIERUNGEN MIT DIOXOLANEN ALS HAFTMITTEL
AQUEOUS FORMULATIONS INCLUDING DIOXOLANES AS COUPLING AGENTS

(30) Priorité: 23.10.2009 FR 0957458
(43) Date de publication de la demande: 29.08.2012
(73) Titulaire: Rhodia Poliamida E Especialidades Ltda, Sao Paulo - SP (BR)
(72) Inventeur: BONIFACIO, Daniela, Hauffe, 13085-220 - Pailinia (SP) (BR); VICENTIM, Denilson, José, 13050-544 - Campinas (SP) (BR); GARBELOTTO, Paulo, Roberto, 13085-309 - Campinas (SP) (BR)
(74) Mandataire: Blanchard, Isabelle Jackie
(86) Numéro de dépôt international: PCT/IB2010/002705
(87) Numéro de publication internationale: WO 2011/048481

(56) Documents cités:
- JP-A- 2008 163 238
- US-B1- 6 340 387
- DATABASE WPI Week 200675 Thomson Scientific, London, GB; AN 2006-721758 XP002589356, & JP 2006 273750 A (NIPPON OILS & FATS CO LTD) 12 octobre 2006 (2006-10-12)

## Description

La présente invention concerne de façon générale des formulations aqueuses pour revêtement, comprenant une résine à base polymère, une charge inorganique et un dioxolane au titre d'agent de couplage. L'invention concerne plus particulièrement des formules de peinture aqueuse comprenant certains dioxolanes au titre d'agents de couplage.

### ART ANTÉRIEUR

Les charges, qui présentent des caractéristiques à la fois inorganiques et hydrophobes, sont des composés largement employés dans les formules de peinture dans le but d'améliorer les performances liées aux propriétés mécaniques, au coût des formules et aux caractéristiques d'inflammabilité. Les charges couramment employées incluent le talc, le carbonate de calcium, la fibre de verre, le trihydrate d'alumine et l'hydroxyde de magnésium. Les polymères couramment employés dans de telles formules présentent un caractère organique, et l'ajout d'une particule inorganique dans le milieu, comme ces charges, est susceptible d'affecter les propriétés principales de la résine. Des agents de couplage sont employés pour empêcher ou minimiser ces effets négatifs.

Les agents de couplage réduisent les effets secondaires de l'ajout de charges à un système polymère en interagissant avec la charge et la résine. Les agents de couplage présentent deux comportements polaires différents et opposés au sein de la même molécule. Le comportement non polaire provient de la chaîne carbonée du composé. L'allongement de la chaîne carbonée augmente les caractères polaire et non polaire. Le comportement polaire provient quant à lui des groupements polaires comme -OH présents dans la structure. Ces groupements interagissent avec la surface de la charge par liaisons hydrogène. Ainsi, les agents de couplage sont capables d'interagir avec la résine non polaire et avec la surface polaire des charges, agissant comme un pont entre elles, et empêchant toute perte non désirée de performances de la charge ou du polymère. Plusieurs types d'agents de couplage sont connus. Dans la liste des composés organiques, les glycols sont les substances qui présentent structurellement les caractéristiques d'agents de couplage efficaces. Les exemples de glycols couramment employés incluent le butylglycol, l'acétate de butylglycol, l'acétate d'éthylglycol et le méthylglycol.

Bien qu'il s'agisse d'agents de couplage connus et employés dans les compositions comprenant des charges et des résines organiques, un effort de recherche constant est mis en oeuvre pour découvrir des alternatives efficaces, simples d'emploi et moins toxiques.

Le document US6340387 tend à améliorer le pouvoir couvrant de peintures aqueuses en réduisant les effets néfastes dus à l'utilisation de charges inorganiques et divulgue des pigments inorganiques, tels que le dioxyde de titane, traités en deux étapes par des agents mouillants à caractère amphiphile tels que des éthers de poly-alkylene glycol comportant des chaînes alkyles de 6 à 22 atomes de carbone.

### DESCRIPTION DE L'INVENTION

La présente invention concerne d'une façon générale l'utilisation du composé de formule (I) en tant qu'agent de couplage entre une résine à base de polymère et une charge inorganique, dans une formulation aqueuse pour revêtement ; 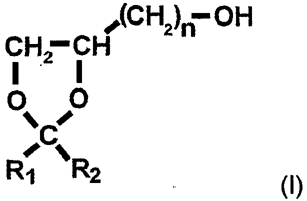 où : R1 et R2 sont identiques ou différents, et sélectionnés parmi l'atome d'hydrogène et les groupements alkyle, alcényle et phényle, n étant un nombre entier compris entre 1 et 5.

R1 et R2 représentent, indépendamment l'un de l'autre, préférentiellement un groupement méthyle, éthyle, n-propyle ou isobutyle. En outre, de façon particulière, n est égal à 1 ou à 2. Le 2,2-diméthyl-1,3-dioxolanne-4-méthanol, appelé solketal (numéro CAS 100-79-8) est notamment préféré. On peut également utiliser par exemple le 2,2-diisobutyle-1,3-dioxolane-4-méthanol, également connu sous l'acronyme IIPG, du synonyme 1-isobutyle-isopropylidène glycérol.

Dans le texte qui suit, le solketal n'est mentionné qu'à titre de dioxolane représentant de façon adéquate la présente invention, ce qui ne limite en aucune façon l'étendue de l'invention à ce seul composé.

Le composé de formule (I) permet ainsi d'agir comme un agent de couplage. Le groupement -OH est impliqué dans des interactions polaires, notamment des liaisons hydrogènes, avec les charges inorganiques ; et le carbone en alpha du groupement -OH est impliqué dans des réactions non polaires, notamment des liaisons de Van der Waals, comme les forces de dispersion de London, avec la résine polymérique. D'autres interactions peuvent également participer à l'effet de couplage des charges inorganiques et de la résine polymérique dans la formulation aqueuse pour revêtement.

Comme le présente le Tableau 1 ci-dessous, la plupart des agents de couplage organiques connus sont des glycols de chaîne courte à moyenne, où la partie non polaire peut être séparée de la partie polaire par l'atome d'oxygène. Bien que l'oxygène agisse comme pont responsable de cette séparation au sein de la molécule, il contribue également, bien qu'en proportion moindre, à la formation de liaisons hydrogène. L'interaction plus faible de l'atome d'oxygène seul par rapport au groupement hydroxyle provient d'effets stériques, c'est-à-dire du fait que la chaîne alkyle occupe un volume plus important que l'atome d'hydrogène. Plus la chaîne alkyle s'allonge et plus la force de la liaison hydrogène-oxygène diminue. Le choix du composé à employer est important dans la mesure où des tailles de chaîne alkyle différentes aboutissent à des résultats différents en termes d'évaporation et de temps de coalescence, en fonction de l'interaction avec la résine et la charge.

**Tableau 1**

| *Comparaison de divers agents de couplage avec le solketal* | | | | | | | |
|---|---|---|---|---|---|---|---|
| Substance | Point d'éclair en °C | P. de vapeur en mm Hg (20°C) | Toxicité orale aiguë en mg/Kg | Irritation cutanée | Irritation oculaire | CMR | Toxicité aquatique en mg/L |
| Butylglycol | 62 | 0,8 | 1 950 | Modérée | Sévère | A3 | 1 720 |
| Acétate de butylglycol | 78 | 0,4 | 2 360 | Faible | Faible | A3 | 103,17 |
| Acétate d'éthylglycol | 47 | 2,0 | 2 900 | Sévère | Sévère | Cat. 2 | 244,66 |
| Méthylglycol | 107 | 6,2 | 18 000 | Faible | Sévère | N/A | 18 000 |
| Éthylglycol | 40 | 5,3 (25°C) | 3 000 | Modérée | Faible | Cat. 2 | 5000 |
| Éthyldiglycol | 93 | 0,1 (25°C) | 5 500 | Sévère | Sévère | N/A | 13400 |
| Solketal | 80 | 52,0 (37,8°C) | 7 000 | Modérée | Modérée | A4 | > 1 000 |

| | | | | | | | |
|---|---|---|---|---|---|---|---|
| *(CMR = cancérogène*/*mutagène*/*toxique pour la reproduction)* | | | | | | | |

Le Tableau 1 montre également que le solketal présente un des points d'éclair les plus élevés, donc moins de risques liés à une irritation cutanée ou oculaire, ainsi qu'une valeur de toxicité orale faible. Ainsi, les caractéristiques de toxicité du solketal vis-à-vis de la santé et de la sécurité humaines sont les plus faibles parmi tous les agents de couplage les plus couramment employés, ce qui rend ce composé extrêmement utile, sûr et de manipulation aisée.

Lorsqu'un composé organique s'évapore, il subit plusieurs types de réactions distinctes avec les composés de l'atmosphère. L'une des plus importantes est la formation d'ozone, due à la présence de composés organiques volatils (COV). On ne peut cependant supposer que des COV différents réagissent de la même façon et génèrent la même quantité d'ozone. La quantité d'ozone formé dans la réaction dépend de deux facteurs principaux :
- des mécanismes réactionnels différents entre les COV et le NOx, dus à des classes différentes de composés organiques ;
- les cinétiques réactionnelles spécifiques aux différents composés organiques.

Ainsi, l'une des méthodes efficaces de maîtrise de la formation d'ozone est la maîtrise des émissions de COV basée sur leur réactivité dans l'atmosphère, en diminuant les émissions de composés plus réactifs. Sans que cette théorie ne soit limitante, on pense que ce type de comparaison est approprié lorsque l'on cherche à minimiser la formation d'ozone due aux émissions de COV, car il intègre le fait que des composés différents génèrent des quantités d'ozone différentes en fonction de leur réactivité.

La réactivité incrémentielle maximale (MIR) est une mesure dépendant de nombreux composés organiques, et qui représente la formation d'ozone dans des situations où la teneur en NOx est ajustée pour obtenir la formation d'ozone maximale. La grandeur qui représente la quantité maximale possible d'ozone formé par un COV spécifique est exprimée en « gO₃/gVOC » (grammes d'ozone par gramme de COV). Ainsi, plus la valeur de MIR est faible et plus l'impact sur l'environnement sera faible. Le Tableau 2 répertorie les valeurs de MIR de certains composés de couplage importants, par comparaison avec le solketal.

**Tableau 2**

| *Valeurs de MIR de composés organiques* | |
|---|---|
| SUBSTANCE | MIR en gO₃/gVOC |
| Butylglycol | 2,79 |
| Acétate de butylglycol | 1,67 |
| Acétate d'éthylglycol | 1,90 |
| Méthylglycol | 0,92 |
| Solketal | 2,01 |

Le butylglycol et le méthylglycol présentent respectivement les valeurs de MIR la plus élevée et la plus faible. Entre ces deux valeurs, les quatre autres composés ont des valeurs de MIR relativement semblables, solketal compris. Le solketal est donc adapté à toutes les applications sans entraîner d'impact environnemental sévère ou inattendu, car sa valeur de MIR est similaire à celle de nombreux agents de couplage utilisés qui ne représentent pas de risque environnemental important.

La formulation comprend préférentiellement de 0,1 à 5 % en poids de composé de formule (I) par rapport au poids total de la composition.

On entend par charges inorganiques dans une formulation de revêtement les composants durs, pouvant présenter différentes fonctionnalités.

On préfère notamment utiliser des charges dans la formulation qui sont des charges inorganiques et pouvant interagir avec la fonction -OH du dioxolane de l'invention par des interactions polaires. Ce type d'interactions peut intervenir avec la fonction -OH du dioxolane si les charges présentent les fonctions suivantes notamment: -OH, -NH3, acide carboxylique, acrylique ou époxy.

Les charges couramment employées dans les formulations de revêtement sont par exemple les charges carbonatées, telle que le carbonate de calcium, les charges silicatées telles que le kaolin, le talc et le mica, les charges silicieuses telle que les silices, ou encore le sulfate de baryum, les fibres de verre, les billes de verre, le trihydrate d'alumine, et l'hydroxyde de magnésium. Les silices peuvent être expansées ou colloïdales. Les fibres de verre peuvent être coupées ou broyées.

La formulation comprend préférentiellement de 5 à 20 % en poids de charges par rapport au poids total de la formulation.

Les polymères couramment employés dans les formules de l'invention sont des polymères organiques. On peut notamment citer les polymères vinyliques tel que le polyacétate de vinyle et le polyalcool vinylique, les résines acryliques tel que le polymère acrylique-styrène, les résines vinyl-acryliques, et les résines époxy, les polyamides, et les polyesters, leurs homopolymères, copolymères et terpolymères.

La formulation comprend préférentiellement de 20 à 60 % en poids de polymère par rapport au poids total de la formulation.

Dans un mode d'application avantageux de l'invention, les formules aqueuses sont en particulier des formules de peinture aqueuse.

Préférentiellement, la formulation de l'invention est une peinture aqueuse latex sur base acrylique.

Préférentiellement la formulation ne comprend pas d'agent de couplage de type glycol, tels que les glycols couramment employés incluant le butylglycol, l'acétate de butylglycol, l'acétate d'éthylglycol et le méthylglycol.

La formulation selon l'invention peut comprendre également d'autres composés généralement utilisés dans le domaine, tels que notamment des pigments, des biocides, des agents de tension de surface, des agents de conservation, et des agents de séchage.

Les formulations selon l'invention sont fabriquées de manières conventionnelles dans le domaine. Les divers additifs sont généralement ajoutés à de l'eau portée à une température permettant un mélange efficace des différents composants.

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnements peuvent notamment être envisagés par une personne au fait du domaine technique concerné sur la base de ses propres connaissances générales.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### PARTIE EXPERIMENTALE

Les exemples qui suivent ne sont fournis qu'à titre de modes d'application particuliers de l'invention, et n'ont pas pour but de représenter des limitations supplémentaires par rapport aux revendications ci-après.

Trois formules de peinture aqueuse sont préparées, comme présenté ci-après dans le Tableau 3. Une formule de référence ne contient pas d'agent de couplage, la formule A contient un agent de couplage connu, l'éther monométhylique de propylène glycol, et la formule B, selon l'invention, contient le solketal au titre d'agent de couplage.

**Tableau 3**

| *Formule de peinture aqueuse testée (résine acrylique styrène - latex)* | | | | |
|---|---|---|---|---|
| **Composant** | **% poids** | **Formule de référence** | **Formule A** | **Formule B (invention)** |
| solvant | 25,35 | Eau | idem | idem |
| dispersant ionique | 0,42 | Dispersant polyacrylate - faible masse moléculaire | idem | idem |
| humidifiant | 0,20 | Nonylphénol éthoxylé | idem | idem |
| agent anticorrosion | 0,05 | nitrite de sodium | idem | idem |
| agent antimousse | 0,30 | agent antimousse huileux | idem | idem |
| pigment | 14,00 | Dioxyde de titane | idem | idem |
| charge | 11,00 | Carbonate de calcium précipité | idem | idem |
| agent coalescent | 1,00 | Ester diisobutylique | idem | idem |
| agent de couplage | 1,5 | aucun | éther monométhylique de propylèneglycol | solketal |
| base | 0,20 | hydroxyde d'ammonium | Idem | Idem |
| biocide | 0,10 | 1,2-benzisothiazolin-3-one | idem | idem |
| épaississant | 0,88 | épaississant anionique modifié hydrophobe | idem | idem |
| émulsion | 45,00 | émulsion acryliquestyrène | idem | idem |
| TOTAL % | 100,00 | | | |

La comparaison des performances est présentée dans le Tableau 4 ci-dessous :

**Tableau 4**

| *Comparaison des performances* | | | |
|---|---|---|---|
| **TEST** | **Formule de référence** | **Formule A (art antérieur)** | **Formule B (invention)** |
| Minceur de la pâte (µm) | 15 | 15 | 15 |
| pH | 8,80 | 8,83 | 8,80 |
| Viscosité Krebs (KU) | 89,3 | 87,4 | 85,7 |
| Pouvoir couvrant (humide) comparaison visuelle | faible par rapport à la formule A | standard | similaire à la formule A |
| Pouvoir couvrant (sec) comparaison visuelle | faible par rapport à la formule A | standard | similaire à la formule A |

Les essais du Tableau 4 ont été effectués suivant les indications ci-après :
- Minceur de la pâte : sert à évaluer la dispersion de la peinture. Norme : ABNT NBR 7.135 (norme brésilienne)
- pH : mesures au pH-mètre.
- Viscosité (Krebs) : doit être à la bonne valeur pour permettre le bon étalement de la peinture. Norme : ABNT 12.105 (norme brésilienne) et ASTM D 562.
- Pouvoir couvrant : évalué par comparaison pour une couche humide et une couche sèche.
- Abrasion : essai effectué dans un appareillage de type Gardner, mesurée en cycles. Norme : ASTM D 1.300.

Les informations présentées dans la présente invention et les résultats du Tableau 4 permettent de conclure que les performances de la peinture incluant les dioxolanes selon l'invention, par exemple le solketal, au titre d'agent de couplage sont satisfaisantes par rapport à une peinture aqueuse formulée avec un agent de couplage de type glycol.

## Revendications

1. Utilisation du composé de formule (I) en tant qu'agent de couplage entre une résine à base de polymère et une charge inorganique, dans une formulation aqueuse pour revêtement ; 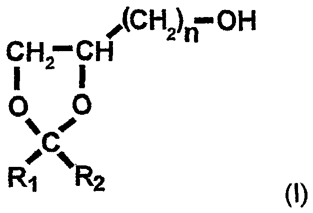 où : R1 et R2 sont identiques ou différents, et sélectionnés parmi l'atome d'hydrogène et les groupements alkyle, alcényle et phényle, n étant un nombre entier compris entre 1 et 5.

2. Utilisation selon la revendication 1, **caractérisée en ce que** R1 et R2 représentent indépendamment l'un de l'autre un groupement méthyle, éthyle, n-propyle ou isobutyle.

3. Utilisation selon la revendication 1 ou 2, **caractérisée en ce que** n est égal à 1 ou à 2.

4. Utilisation selon l'une quelconque des revendications 1 à 3, **caractérisée en ce que** le composé de formule (I) est le 2,2-diméthyl-1,3-dioxolane-4-méthanol.

5. Utilisation selon l'une quelconque des revendications 1 à 4, **caractérisée en ce que** les charges inorganiques présentent les fonctions suivantes: -OH, -NH3, acide carboxylique, acrylique ou époxy.

6. Utilisation selon l'une quelconque des revendications 1 à 5, **caractérisée en ce que** les charges inorganiques sont choisies dans le groupe constitué par : les charges carbonatées, les charges silicatées, les charges silicieuses, les fibres de verre, les billes de verre, le trihydrate d'alumine, et l'hydroxyde de magnésium.

7. Utilisation selon l'une quelconque des revendications 1 à 6, **caractérisée en ce que** formulation comprend de 5 à 20 % en poids de charges par rapport au poids total de la formulation.

8. Utilisation selon l'une quelconque des revendications 1 à 7, **caractérisée en ce que** la résine à base de polymère est choisie dans le groupe constitué par : les polymères vinyliques, les résines acryliques, les résines vinyl-acryliques, les résines époxy, les polyamides, et les polyesters, leurs homopolymères, copolymères et terpolymères.

9. Utilisation selon l'une quelconque des revendications 1 à 8, **caractérisée en ce que** formulation comprend de 20 à 60 % en poids de résine à base de polymère par rapport au poids total de la formulation.

10. Utilisation selon l'une quelconque des revendications 1 à 9, **caractérisée en ce que** la formulation est une formule de peinture aqueuse.

11. Utilisation selon l'une quelconque des revendications 1 à 10, **caractérisée en ce que** formulation est une peinture aqueuse latex sur base acrylique.

12. Utilisation selon l'une quelconque des revendications 1 à 11, **caractérisée en ce que** la formulation ne comprend pas d'agent de couplage de type glycol.

## Patentansprüche

1. Verwendung der Verbindung der Formel (I) als Kupplungsmittel zwischen einem Harz auf Polymerbasis und einem anorganischen Füllstoff in einer wässrigen Beschichtungsformulierung; 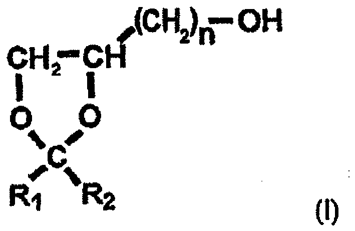 wobei R1 und R2 gleich oder verschieden sind und aus einem Wasserstoffatom und Alkyl-, Alkenyl- und Phenylgruppen ausgewählt sind, wobei n für eine ganze Zahl zwischen 1 und 5 steht.

2. Verwendung nach Anspruch 1, **dadurch gekennzeichnet, dass** R1 und R2 unabhängig voneinander für eine Methyl-, Ethyl-, n-Propyl- oder Isobutylgruppe stehen.

3. Verwendung nach Anspruch 1 oder 2, **dadurch gekennzeichnet, dass** n gleich 1 oder 2 ist.

4. Verwendung nach einem der Ansprüche 1 bis 3, **dadurch gekennzeichnet, dass** es sich bei der Verbindung der Formel (I) um 2,2-Dimethyl-1,3-dioxolan-4-methanol handelt.

5. Verwendung nach einem der Ansprüche 1 bis 4, **dadurch gekennzeichnet, dass** die anorganischen Füllstoffe die folgenden Funktionen aufweisen: -OH,-NH3, Carbonsäure, Acryl oder Epoxid.

6. Verwendung nach einem der Ansprüche 1 bis 5, **dadurch gekennzeichnet, dass** die anorganischen Füllstoffe aus der Gruppe bestehend aus Carbonat-Füllstoffen, Silikat-Füllstoffen, siliciumdioxidhaltigen Füllstoffen, Glasfasern, Glaskugeln, Aluminiumtrihydrat und Magnesiumhydroxid ausgewählt sind.

7. Verwendung nach einem der Ansprüche 1 bis 6, **dadurch gekennzeichnet, dass** die Formulierung 5 bis 20 Gew.-% Füllstoffe, bezogen auf das Gesamtgewicht der Formulierung, umfasst.

8. Verwendung nach einem der Ansprüche 1 bis 7, **dadurch gekennzeichnet, dass** das Harz auf Polymerbasis aus der Gruppe bestehend aus Vinylpolymeren, Acrylharzen, Vinylacrylharzen, Epoxidharzen, Polyamiden, Polyestern, deren Homopolymeren, Copolymeren und Terpolymeren ausgewählt ist.

9. Verwendung nach einem der Ansprüche 1 bis 8, **dadurch gekennzeichnet, dass** die Formulierung 20 bis 60 Gew.-% Harz auf Polymerbasis, bezogen auf das Gesamtgewicht der Formulierung, umfasst.

10. Verwendung nach einem der Ansprüche 1 bis 9, **dadurch gekennzeichnet, dass** es sich bei der Formulierung um eine wässrige Anstrichmittelrezeptur handelt.

11. Verwendung nach einem der Ansprüche 1 bis 10, **dadurch gekennzeichnet, dass** es sich bei der Formulierung um ein wässriges Latexanstrichmittel auf Acrylbasis handelt.

12. Verwendung nach einem der Ansprüche 1 bis 11, **dadurch gekennzeichnet, dass** die Formulierung kein Kupplungsmittel vom Glykol-Typ umfasst.

## Claims

1. Use of the compound of formula (I) as a coupling agent between a polymer-based resin and an inorganic filler, in an aqueous coating formulation; 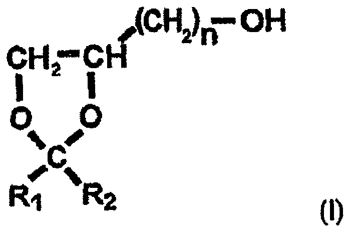 where R1 and R2 are identical or different and are selected from a hydrogen atom and alkyl, alkenyl and phenyl groups, n being an integer between 1 and 5.

2. Use according to Claim 1, **characterized in that** R1 and R2 represent independently of one another a methyl, ethyl, n-propyl or isobutyl group.

3. Use according to Claim 1 or 2, **characterized in that** n is 1 or 2.

4. Use according to any of Claims 1 to 3, **characterized in that** the compound of formula (I) is 2,2-dimethyl-1,3-dioxolane-4-methanol.

5. Use according to any of Claims 1 to 4, **characterized in that** the inorganic fillers have the following functions: -OH, -NH3, carboxylic acid, acrylic or epoxy.

6. Use according to any of Claims 1 to 5, **characterized in that** the inorganic fillers are selected from the group consisting of carbonate fillers, silicate fillers, siliceous fillers, glass fibres, glass beads, alumina trihydrate and magnesium hydroxide.

7. Use according to any of Claims 1 to 6, **characterized in that** the formulation comprises from 5% to 20% by weight of fillers, relative to the total weight of the formulation.

8. Use according to any of Claims 1 to 7, **characterized in that** the polymer-based resin is selected from the group consisting of vinyl polymers, acrylic resins, vinyl-acrylic resins, epoxy resins, polyamides and polyesters, their homopolymers, copolymers and terpolymers.

9. Use according to any of Claims 1 to 8, **characterized in that** the formulation comprises from 20% to 60% by weight of polymer-based resin, relative to the total weight of the formulation.

10. Use according to any of Claims 1 to 9, **characterized in that** the formulation is an aqueous paint formula.

11. Use according to any of Claims 1 to 10, **characterized in that** the formulation is an acrylic-based aqueous latex paint.

12. Use according to any of Claims 1 to 11, **characterized in that** the formulation does not comprise a glycol coupling agent.
